# EUROPEAN PATENT APPLICATION

(11) **EP 4 645 883 A1**
(43) Date of publication of application: **05.11.2025**
(21) Application number: 23910021.7
(22) Date of filing: 06.12.2023
(51) Int. Cl.: H04N 21/472

(54) **INFORMATION PROCESSING METHOD AND APPARATUS**

(30) Priority: 30.12.2022 CN 202211740935
(71) Applicant: Beijing Zitiao Network Technology Co., Ltd., Beijing 100190 (CN)
(72) Inventor: WEN, Peixuan, Beijing 100028 (CN); GAO, Xiangyu, Beijing 100028 (CN)
(74) Representative: Isarpatent
(86) International application number: PCT/CN2023/136916
(87) International publication number: WO 2024/140091

(57) **Abstract**

An information processing method is provided, including: displaying a playing page for first multimedia content, and displaying prompt information on the playing page, where the first multimedia content belongs to a first multimedia content collection, and the prompt information is used for prompting that a favorited multimedia content collection has an update; and in response to a triggering operation for the prompt information, displaying information of the favorited multimedia content collection having the update. Therefore, the current solution can display the prompt information on the playing page to prompt a user that the favorited multimedia content collection has the update. In addition, in response to the triggering operation for the prompt information, the current solution can further display the information of the favorited multimedia content collection having the update, so that a user determines which favorited multimedia content collection has an update. The operation required to be performed by the user to determine that the multimedia content collection favorited by the user has the update is relatively simple, thus enhancing a user experience.

## Description

This application claims priority to Chinese Patent Application No. 202211740935.4, entitled "INFORMATION PROCESSING METHOD AND APPARATUS", filed on December 30, 2022, which is incorporated herein by reference in its entirety.

### FIELD

The present application relates to the technical field of computers, and in particular, to an information processing method and apparatus.

### BACKGROUND

A user can post a multimedia content collection through an application. Correspondingly, other users can watch the posted multimedia content collection through the application. If the user is interested in the watched multimedia content collection, the user can also favorite the multimedia content collection to subsequently continue to watch multimedia content in the multimedia content collection. For example, when there is an update on the multimedia content collection, the user can continue to watch updated multimedia content.

At present, it is cumbersome for the user to determine whether the favorited multimedia content collection needs to be updated. Therefore, there is an urgent need for a solution that can solve the above problems.

### SUMMARY

To solve or at least solve the above technical problems, embodiments of the present application provide an information processing method and apparatus.

In a first aspect, the embodiments of the present application provide an information processing method, including:
displaying a playing page for first multimedia content, and displaying prompt information on the playing page, wherein the first multimedia content belongs to a first multimedia content collection, and the prompt information is used for prompting that a favorited multimedia content collection has an update; and
in response to a triggering operation for the prompt information, displaying information of the favorited multimedia content collection having the update.

Optionally, displaying the information of the favorited multimedia content collection having the update includes:
displaying information respectively corresponding to each collection of at least one collection in a first area in the playing page, and playing the first multimedia content in a second area on the playing page outside the first area, wherein the at least one collection is a part or all of the favorited multimedia content collection having the update.

Optionally, displaying the information of the favorited multimedia content collection having the update includes:
displaying a favorited collection list on the playing page, wherein the favorited collection list includes information respectively corresponding to each collection of at least one collection, and the at least one collection is a part or all of the favorited multimedia content collection having the update.

Optionally, displaying the information of the favorited multimedia content collection having the update includes:
displaying update information respectively corresponding to each collection of at least one collection, wherein the at least one collection is a part or all of the favorited multimedia content collection having the update.

Optionally, displaying the update information respectively corresponding to each collection of the at least one collection includes:
displaying the update information respectively corresponding to each collection according to an update order of the at least one collection.

Optionally, in response to the favorited multimedia content collection including the first multimedia content collection, update information of the first multimedia content collection is positioned at a first place of the update information respectively corresponding to each collection.

Optionally, the update information respectively corresponding to each collection of the at least one collection includes first update information of a first favorited collection; and the method further includes:
in response to a triggering operation for the first update information, switching the first multimedia content played on the playing page into multimedia content in the first favorited collection of the at least one collection.

Optionally, the method further includes:
in response to a preset sliding operation triggered in the second area on the playing page, switching the first multimedia content played on the playing page to multimedia content in a second favorited collection of the at least one collection.

Optionally,
in response to the at least one collection including the first multimedia content collection, the second favorited collection is a favorited multimedia content collection, which is displayed adjacent to the first multimedia content collection, of the at least one collection; or,
in response to the at least one collection not including the first multimedia content collection, the second favorited collection is a favorited multimedia content collection with latest update time of the at least one collection.

Optionally, an interaction identifier is further displayed in the first area; the interaction identifier is used for triggering displaying of a favorited collection list; and the method further includes: in response to a triggering operation for the interaction identifier, displaying the favorited collection list.

Optionally, the method further includes:
in response to that a quantity of pieces of updated multimedia content, which have been played, in the first favorited collection changes, updating the first update information into second update information.

Optionally, switching the first multimedia content played on the playing page into the multimedia content in the first favorited collection of the at least one collection includes:
switching the first multimedia content played on the playing page into updated multimedia content in the first favorited collection or the second favorited collection; or,
switching the first multimedia content played on the playing page into a first piece of multimedia content in the first favorited collection or the second favorited collection; or,
switching the first multimedia content played on the playing page into unplayed multimedia content in the first favorited collection or the second favorited collection.

Optionally, the method further includes:
in response to a close operation triggered in the playing page, canceling the displaying of the update information of each collection.

Optionally, displaying the playing page for the first multimedia content includes:
displaying the first multimedia content on a first page; and
in response to a first operation for the first page, switching the first page to the playing page, and displaying the first multimedia content on the playing page.

The first page is used for displaying a first multimedia stream; the playing page is used for displaying a second multimedia stream; multimedia content in the second multimedia stream is multimedia content corresponding to a collection; and multimedia content in the first multimedia stream includes multimedia content corresponding to a collection and multimedia content corresponding to a non-collection.

In a second aspect, the embodiments of the present application provide an information processing apparatus, including:
a first display unit, configured to display a playing page for first multimedia content;
a second display unit, configured to display prompt information on the playing page, wherein the first multimedia content belongs to a first multimedia content collection, and the prompt information is used for prompting that a favorited multimedia content collection has an update; and
a third display unit, configured to: in response to a triggering operation for the prompt information, display information of the favorited multimedia content collection having the update.

Optionally, the third display unit is configured to:
display information respectively corresponding to each collection of at least one collection in a first area in the playing page, and play the first multimedia content in a second area on the playing page outside the first area, wherein the at least one collection is a part or all of the favorited multimedia content collection having the update.

Optionally, the third display unit is configured to:
display a favorited collection list on the playing page, wherein the favorited collection list includes information respectively corresponding to each collection of at least one collection, and the at least one collection is a part or all of the favorited multimedia content collection having the update.

Optionally, the third display unit is configured to:
display update information respectively corresponding to each collection of at least one collection, wherein the at least one collection is a part or all of the favorited multimedia content collection having the update.

Optionally, the third display unit is configured to:
display the update information respectively corresponding to each collection according to an update order of the at least one collection.

Optionally, in response to the favorited multimedia content collection including the first multimedia content collection, update information of the first multimedia content collection is positioned at a first place of the update information respectively corresponding to each collection.

Optionally, the update information respectively corresponding to each collection of the at least one collection includes first update information of a first favorited collection; and the apparatus further includes:
a first switching unit, configured to: in response to a triggering operation for the first update information, switch the first multimedia content played on the playing page into multimedia content in the first favorited collection of the at least one collection.

Optionally, the apparatus further includes:
a second switching unit, configured to: in response to a preset sliding operation triggered in the second area on the playing page, switch the first multimedia content played on the playing page to multimedia content in a second favorited collection of the at least one collection.

Optionally,
in response to the at least one collection including the first multimedia content collection, the second favorited collection is a favorited multimedia content collection, which is displayed adjacent to the first multimedia content collection, of the at least one collection; or,
in response to the at least one collection not including the first multimedia content collection, the second favorited collection is a favorited multimedia content collection with latest update time of the at least one collection.

Optionally, an interaction identifier is further displayed in the first area; the interaction identifier is used for triggering displaying of a favorited collection list; and the apparatus further includes:
a fourth display unit, configured to: in response to a triggering operation for the interaction identifier, displaying the favorited collection list.

Optionally, the apparatus further includes:
an update unit, configured to: in response to that a quantity of pieces of updated multimedia content, which have been played, in the first favorited collection changes, update the first update information into second update information.

Optionally, switching the first multimedia content played on the playing page into the multimedia content in the first favorited collection of the at least one collection includes:
switching the first multimedia content played on the playing page into updated multimedia content in the first favorited collection or the second favorited collection; or,
switching the first multimedia content played on the playing page into a first piece of multimedia content in the first favorited collection or the second favorited collection; or,
switching the first multimedia content played on the playing page into unplayed multimedia content in the first favorited collection or the second favorited collection.

Optionally, the apparatus further includes:
a displaying canceling unit, configured to: in response to a close operation triggered in the playing page, cancel the displaying of the update information of each collection.

Optionally, the first display unit is configured to:
display the first multimedia content on a first page; and
in response to a first operation for the first page, switch the first page to the playing page, and display the first multimedia content on the playing page.

The first page is used for displaying a first multimedia stream; the playing page is used for displaying a second multimedia stream; multimedia content in the second multimedia stream is multimedia content corresponding to a collection; and multimedia content in the first multimedia stream includes multimedia content corresponding to a collection and multimedia content corresponding to a non-collection.

In a third aspect, the embodiments of the present application provide a device. The device includes a processor and a memory.

The processor is configured to execute instructions stored in the memory to cause the device to perform any method in the above first aspect.

In a fourth aspect, the embodiments of the present application provide a computer-readable storage medium, including instructions. The instructions instruct a device to perform any method in the above first aspect.

In a fifth aspect, the embodiments of the present application provide a computer program product. The computer program product, when run on a computer, causes the computer to perform any method in the above first aspect.

### BRIEF DESCRIPTION OF THE DRAWINGS

To describe the technical solutions in the embodiments of the present application or in the related art more clearly, the following briefly introduces the accompanying drawings for describing the embodiments or the related art. Apparently, the accompanying drawings in the following description show merely some embodiments recorded in the present application, and a person of ordinary skill in the art may still derive other drawings from the accompanying drawings without creative efforts.
FIG. 1 is a flowchart of a message processing method according to an embodiment of the present application;
FIG. 2a is a schematic diagram of a playing page provided by an embodiment of the present application;
FIG. 2b is a schematic diagram of another playing page provided by an embodiment of the present application;
FIG. 2c is a schematic diagram of still another playing page provided by an embodiment of the present application; and
FIG. 3 is a schematic structural diagram of an information processing apparatus provided by an embodiment of the present application.

### DETAILED DESCRIPTION OF EMBODIMENTS

To make a person skilled in the art to better understand the solutions of the present application, the technical solutions in the embodiments of the present application are clearly and completely described below with reference to the accompanying drawings in the embodiments of the present application. Apparently, the described embodiments are merely some rather than all of the embodiments of the present application. All other embodiments obtained by a person of ordinary skill in the art based on the embodiments of the present disclosure without making creative efforts shall fall within the protection scope of the present disclosure.

The inventor of the present application has found through research that at present, after a user collects a multimedia content collection, if the user intends to determine whether the multimedia content collection has an update, the user can mainly find collected content from a personal homepage, and search for the multimedia content collection from the collected content, thereby determining whether the multimedia content collection has an update. In this process, operations needing to be performed by the user are relatively complex.

To solve the above problems, the embodiments of the present application provide an information processing method and apparatus.

Various nonrestrictive implementations of the present application will be explained in detail below in conjunction with the accompanying drawings.

### Exemplary method

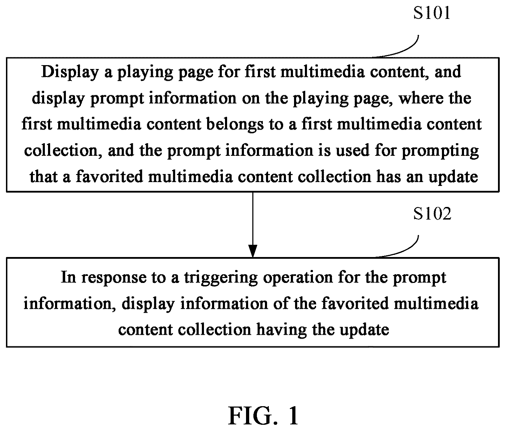

Referring to FIG. 1, it is a flowchart of an information processing method provided by an embodiment of the present application. In this embodiment, the method may be applied to a client. As an example, the method may, for example, include the following steps: S101-S102.

S101: A playing page for first multimedia content is displayed, and prompt information is displayed on the playing page. The first multimedia content belongs to a first multimedia content collection, and the prompt information is used for prompting that a favorited multimedia content collection has an update.

In an example, before displaying the playing page for the first multimedia content, the client may display the first multimedia content on the first page, and a user may trigger a first operation on the first page. Correspondingly, the client may switch, in response to the first operation, the first page to the playing page and display the first multimedia content on the playing page. In this embodiment of the present application, the first page can be used for displaying a first multimedia stream. Multimedia content in the first multimedia stream includes multimedia content corresponding to a collection and multimedia content corresponding to a non-collection. The playing page can be used for displaying a second multimedia stream. Multimedia content in the second multimedia stream is multimedia content corresponding to a collection. The first multimedia stream and the second multimedia stream both include the first multimedia content. When the user triggers the first operation, image content displayed on the first page is the first multimedia content. In other words, the first operation is used for triggering switching from the first page corresponding to the first multimedia content to the playing page corresponding to the first multimedia content.

This embodiment of the present application will not impose a specific limitation on the first operation. The first operation may be, for example, a click (e.g. single-click) operation.

When the multimedia content is video content, a multimedia stream (including the first multimedia stream and the second multimedia stream) may be a video stream. When the multimedia content is image content, the multimedia stream may also be an image data stream. This embodiment of the present application will not impose a specific limitation.

In another example, before displaying the playing page for the first multimedia content, the client may display another multimedia content which is different from the first multimedia content on a second page. The user may trigger a second operation on the second page. Correspondingly, the client may switch, in response to the second operation, the second page to the playing page and display the first multimedia content on the playing page. In this case, both the second page and the playing page are used for displaying the first multimedia stream. The first multimedia stream will be found in the relevant description section in the previous text and will not be repeatedly described here.

This embodiment of the present application will not impose a specific limitation on the second operation. The second operation may be a sliding operation. For example, the second operation may be a slide up operation or a slide down operation.

In this embodiment of the present application, the first multimedia content may be played on the playing page for the first multimedia content in full screen. In an example, the prompt information may be displayed in the form of a floating layer in a specific area of the playing page.

This embodiment of the present application will not impose a specific limitation on the specific area. The specific area may be any area in the playing page. For example, the specific area may be positioned in an upper half part of the playing page. This embodiment of the present application will not impose a specific limitation on the prompt information. In an example, the prompt information may be, for example, used for prompting a quantity of updated collections in the favorited multimedia content collection. The prompt information may be prompt text. For example, the prompt information may be "3 collections have been updated".

Regarding the favorited multimedia content collection, it should be noted that in an example, the favorited multimedia content collection can be a multimedia content collection collected in a corresponding account of the client. The account corresponding to the client can be, for example, an account logged in on the client.

S102: In response to a triggering operation for the prompt information, information of the favorited multimedia content collection having the update is displayed.

The user may trigger an operation for the prompt information, for example, triggering a click operation on the prompt information. Correspondingly, the client may display, in response to the triggering operation for the prompt information, the information of the favorited multimedia content collection having the update. For example, if the aforementioned prompt information is "3 collections have been updated", the client may display, in response to the triggering operation for the prompt message, display information corresponding to a part or all of the three favorited multimedia content collections having the updates.

The information of the collection mentioned in this embodiment of the present application may include, for example, an identifier of the collection. The identifier of the collection may include, for example, a name of the collection and/or an image related to the collection.

In an example, to facilitate a user to determine an update state of the collection through the information of the collection, the information of the collection may include update information of the collection. The update information of the collection may be used for indicating the update state of the collection. In an example, the update information of the collection may include, for example, a quantity of updated multimedia content in the collection (e.g. a quantity of episodes of updated multimedia content). In an embodiment, the client may display update information respectively corresponding to each collection of at least one collection. The at least one collection is a part or all of the updated multimedia content collections. Specifically, assuming that an area for displaying the information of the collection can display information of M collections. If N collections have updates, when N is less than or equal to M, the at least one collection may be the N collections having the updates. When N is greater than M, the at least one collection may be the M collections having the updates. For example, assuming that the area for displaying the information of the collection may display information of four collections, if there are currently five collections having updates, the update information of each collection in the four collections can be displayed. In addition, the playing page may further display a target control, and the user may trigger an operation through the target control to view the information of the other collection with the update. For another example, assuming that the area for displaying the information of the collection may display information of four collections, if there are currently three collections having updates, the update information of each collection in the three collections may be displayed.

In an example, in specific implementation of S102, the information respectively corresponding to each collection in the at least one collection may be displayed in a first area of the playing page, and the first multimedia content may be played in a second area on the playing page outside the first area. In other words, after the user triggers an operation for the prompt information, the client may zoom in the first multimedia content that is played in full screen to the second area for playing, and display the information respectively corresponding to each collection in the first area. In this way, through the playing page, the user can view the information respectively corresponding to each collection and the first multimedia content, thereby enabling the user to obtain rich information through the playing page without interrupting the user from watching the first multimedia content, and enhancing a user experience. The at least one collection may be a part or all of the favorited multimedia content collection having the update. The at least one collection may be found in the relevant description section in the previous text and will not be repeatedly described.

In an example, the first area may display the information respectively corresponding to each collection and an interaction identifier. The interaction identifier is used for triggering displaying of a favorited collection list. In this case, the user can further trigger an operation for the interaction identifier. Correspondingly, the client may display the favorited collection list in response to the triggering operation for the interaction identifier. The favorited collection list may include information of various multimedia content collections collected by the client. In this way, the user can quickly view the favorited collection list through the interaction identifier, thereby determining various multimedia content collections collected by the client.

This embodiment of the present application will not impose a specific limitation on the first area. The first area may be any area in the playing page. As an example, the first area may be, for example, a top area in the playing page.

In another example, in specific implementation of S102, the favorited collection list may be displayed on the playing page, and information respectively corresponding to each collection in the least one collection may be displayed in the favorited collection list. Specifically, the information may be the update information corresponding to each collection, such as a collection cover of each collection, a collection name of each collection, and content update information in the various collections (i.e., information of updated content in this collection, e.g. a quantity of updated multimedia content in this collection, a name of the updated multimedia content, and a cover of the updated multimedia content). The at least one collection is a part or all of the favorited multimedia content collection having the update. The favorited collection list may include information of various multimedia content collections collected by the client. In this case, after a user triggers an operation for the prompt information, the user can view the information of the at least one collection having the update, and can view information of a collection without updated multimedia content. Moreover, displaying the favorited collection list can also facilitate the user to quickly view content of a collection of interest in updated collections. The at least one collection can be found in the relevant description section in the previous text and will not be repeatedly described here.

In this embodiment of the present application, the client can display the update information respectively corresponding to each collection in an order when displaying the update information respectively corresponding to each collection. As an example, the update information respectively corresponding to each collection may be displayed according to an update order of the at least one collection. For example, for a collection with later update time, its update information will be displayed earlier. In this way, the order in which the user views the update information respectively corresponding to the various collections is consistent with the update order of the at least one collection. For example, the user can first view the update information of the collection that is updated at last.

In an example, in response to the at least one collection including the aforementioned first multimedia content collection, the update information, displayed by the client, of each collection includes the update information for the first multimedia content collection. In this case, the update information of the first multimedia content collection may be located at the beginning of the update information respectively corresponding to each collection, so that the user can determine that the first multimedia content that is being played belongs to the first multimedia content collection. In this case, in an example, the update information of the first multimedia content collection may include indication information for indicating that the first multimedia collection is a collection that is being played.

In an example, the aforementioned at least one collection may include a first favorited collection. Correspondingly, the update information of the first favorited collection may include first update information of the first favorited collection. The first update information may be used for, for example, indicating a current update state of the first favorited collection. The first update information may be determined according to a quantity of updated multimedia content that has not yet been played in the current first favorited collection. The updated multimedia content may be understood as newly updated (or posted) multimedia content in the collection. For example, if the first favorited collection has been updated with three episodes, and none of the three episodes have been played by the client, the first update information may include "3 episodes have been updated". In this case, the user can trigger an operation for the first update information, such as, clicking on a display area of the first update information. Correspondingly, the client may switch, in response to a triggering operation for the first update information, switch the first multimedia content played on the playing page into multimedia content in the first favorited collection of the at least one collection. In an example, if the information respectively corresponding to each collection is displayed in the first area, the client may cancel, in response to the triggering operation for the first update information, the displaying of the information that is displayed in the first area and respectively corresponds to each collection, and play, on the video playing page, the multimedia content in the first favorited collection in full screen. In another example, if the information respectively corresponding to each collection is displayed in the first area, the client may play the multimedia content of the first favorited collection in the second area of the playing page in response to the triggering operation for the first update information.

In an example, the multimedia content, played by the client, in the first favorited collection may be, for example, updated multimedia content in the first favorited collection, or multimedia content, which is updated first, in the first favorited collection. For example, if the first favorited collection has been updated with three episodes, which are Episode 5, Episode 5, and Episode 7 according to the update time from early to late, the multimedia content, played by the client, in the first favorited collection may be, for example, Episode 5 mentioned above. In another example, the multimedia content, played by the client, in the first favorited collection may be a first piece of multimedia content in the first favorited collection. In another example, the multimedia content, played by the client, in the first favorited collection may also be multimedia content that has not yet been played in the first favorited collection. For example, the multimedia content can be content, which is posted earliest, in the multimedia content that has not yet been played. In this way, the user can continue to watch the multimedia content that has not yet been watched.

In another example, if the first area of the playing page displays the information respectively corresponding to each collection, the first multimedia content is played in the second area of the playing page. The user may also trigger a preset sliding operation in the second area. The preset sliding operation mentioned here may be a horizontal sliding operation such as sliding left or sliding right. Correspondingly, the client may switch the first multimedia content played on the playing page to multimedia content in a second favorited collection of the at least one collection in response to the preset sliding operation. In an example, the client may switch the first multimedia content played in the second area to the multimedia content in the second favorited collection. In this way, the user can quickly view the content of the collection content of interest in the updated favorited collections by triggering the preset sliding operation in the second area.

Regarding the second favorited collection, it should be noted that:
In an example, in response to the at least one collection including the first multimedia content collection, the second favorited collection is a favorited multimedia content collection, which is displayed adjacent to the first multimedia content collection, of the at least one collection. In a specific example, the information of the first multimedia content collection is located at the beginning of the information of each multimedia content collection, and the second favorited collection is a second-ranked multimedia content collection in the various multimedia content collections.

In response to the at least one collection not including the first multimedia content collection, the second favorited collection may be a favorited multimedia content collection with latest update time of the at least one collection. In this way, the user can preferentially view multimedia content in recently updated collections.

In an example, the multimedia content, played by the client, in the second favorited collection may be, for example, updated multimedia content in the second favorited collection, or multimedia content, which is updated first, in the second favorited collection. For example, if the second favorited collection has been updated with three episodes, which are Episode 5, Episode 5, and Episode 7 according to the update time from early to late, the multimedia content, played by the client, in the second favorited collection may be, for example, Episode 5 mentioned above. In still another example, the multimedia content, played by the client, in the second favorited collection may be a first piece of multimedia content in the second favorited collection. In yet another example, the multimedia content, played by the client, in the second favorited collection may also be multimedia content that has not yet been played in the second favorited collection. For example, the multimedia content may be content, which is posted earliest, in the multimedia content that has not yet been played. In this way, the user can continue to watch the multimedia content that has not yet been watched.

In an example, if the quantity of the updated multimedia content that has been already played in the first favorited collection has changed, the client can update the first update information of the first favorited collection to second update information. The second update information is used for indicating an update state of the first favorited collection after the quantity of the updated multimedia content that has been already played in the first favorited collection has changed. For example, if the first favorited collection has been updated with three episodes, which are Episode 5, Episode 6, and Episode 7 according to the update time from early to late, the first update information is "3 episodes have been updated", and the client updates the first update information "3 episodes have been updated" to the second update information "2 episodes have been updated" after the playing of Episode 5 ends. In this way, the second update information of the first favorited collection can be matched with the updated multimedia content that has not yet been played in the first favorited collection, so that the user determines a state of the updated multimedia content that has not been viewed in the first favorited collection.

In this embodiment of the present application, after the client displays the update information of each collection, the user can trigger a close operation in the video playing page. Correspondingly, the client may cancel the displaying of the update information of each collection in response to the close operation.

This embodiment of the present application does not impose a specific limitation on the close operation. In an example, the close operation may be a click operation, such as a click operation triggered in the first area or the second area mentioned above. In another example, the close operation may be a longitudinal sliding operation, for example, a slide up operation triggered in the second area mentioned above.

In an example, after the displaying of the information of each collection is canceled, the video playing page is used for playing multimedia content of a collection in full screen (e.g. the first multimedia content or the multimedia content in the first favorited collection). In this case, the user can trigger the longitudinal sliding operation on the video playing page to switch the content played on the video playing page between the multimedia content included in the collection. For example, if Episode 3 of Collection A is being played on the video playing page, after the user triggers a slide up operation in the video playing page, the content played on the video playing page is switched to Episode 2 of Collection A. For another example, if Episode 3 of Collection A is being played on the video playing page, after the user triggers a slide down operation in the video playing page, the content played on the video playing page is switched to Episode 4 of Collection A.

In an example, the video playing page may further include an episode selection control of a multimedia content collection corresponding to currently played multimedia content. For example, the episode selection control is displayed in a bottom area in the video playing page. The user may view an episode selection panel corresponding to the multimedia content collection through the episode selection control, and episodes of multimedia content included in the multimedia content collection are displayed in the episode selection panel. In an example, the episode selection panel may include a first control for triggering displaying of a favorited collection list. Correspondingly, the user may trigger an operation through the first control. Correspondingly, the client may display the favorited collection list in response to the triggering operation for the first control. The favorited collection list may include the information of each collection mentioned above. In this way, the user can also quickly determine information of a multimedia content collection having an update.

In another example, the video playing page may further include a second control for triggering displaying of a favorited collection list. Correspondingly, the user may trigger an operation through the second control. Correspondingly, the client may display the favorited collection list in response to the triggering operation for the second control. The favorited collection list may include the information of each collection mentioned above. In this way, the user may also quickly determine information of a multimedia content collection having an update.

In an example, the second control may be represented as a corresponding copy. For example, the second control may be represented as a copy "Favorites list". In another example, the second control may be represented as an icon corresponding to the favorites list. In still another example, the second control is first displayed as a corresponding copy. After the user triggers an operation on the copy, a display style corresponding to the second control is reflected as an icon corresponding to the favorites list.

From the above description, it can be seen that with this solution, the client can display the prompt information on the playing page to indicate that the favorited multimedia content collection has the update. In addition, the client may further display, in response to the triggering operation for the prompt information, the information of the favorited multimedia content collection having the update, so that the user determines which favorited multimedia content as an update. From this, it can be seen that with this solution, the user can determine, according to the prompt information, that the favorited multimedia content collection has the update, and the user can determine which favorited multimedia content as an update by triggering the operation on the prompt information. The operation needing to be performed by the user to determine that the multimedia content collection collected by the user has the update is simple, so that a user experience is enhanced.

The information processing method provided by this embodiment of the present application has been introduced above. The solution provided by the embodiments of the present application will be introduced below with reference to the accompanying drawings.

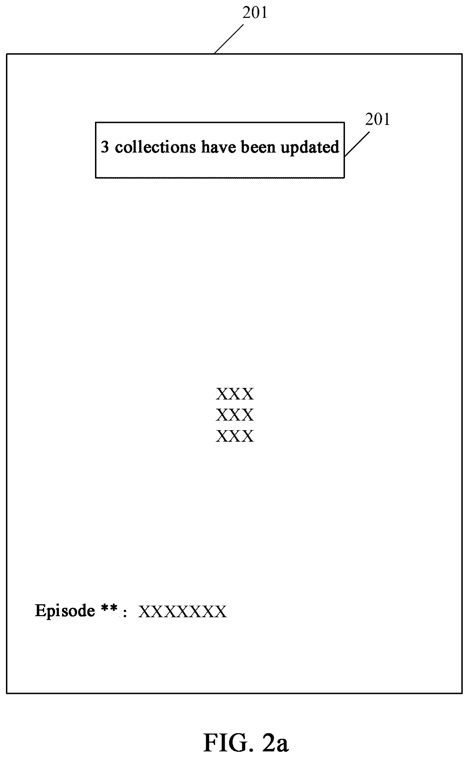

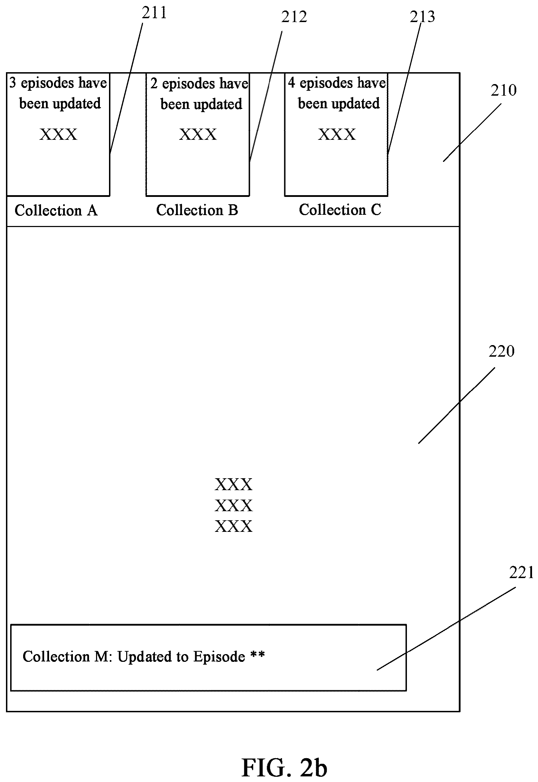

Referring to FIG. 2a, it is a schematic diagram of a playing page provided by an embodiment of the present application. As shown in FIG. 2a, first multimedia content in Collection M is played in full screen on the playing page 200. Prompt information 201 is displayed on the playing page 200. After a user triggers an operation for the prompt information 201, the playing page displayed by a client is as shown in FIG. 2b. Collection information of three collections is displayed in a first area 210 in the playing page 200 shown in FIG. 2b, namely: collection information 211, collection information 212, and collection information 213. The first multimedia content in Collection M is played in a second area 220 in the playing page 200 shown in FIG. 2b.

Collection information 211 includes a collection name "Collection A" and update information "3 episodes have been updated" of Collection A. Collection information 212 includes a collection name "Collection B" and update information "2 episodes have been updated" of Collection B. Collection information 213 includes a collection name "Collection C" and update information "4 episodes have been updated" of Collection C.

An episode selection control 221 corresponding to Collection M is displayed at a bottom of the second area 220.

In an example, the user may trigger a left slide operation in the second area 220, to switch multimedia content played in the second area to multimedia content in Collection A.

In another example, the user may trigger an operation for 211 in the first area, to play multimedia content in Collection A in full screen on the video playing page 200.

In still another example, the user may further trigger a click operation in the first area 210 or the second area 220, to cause the client to cancel the displaying of the collection information of the three collections in the first area.

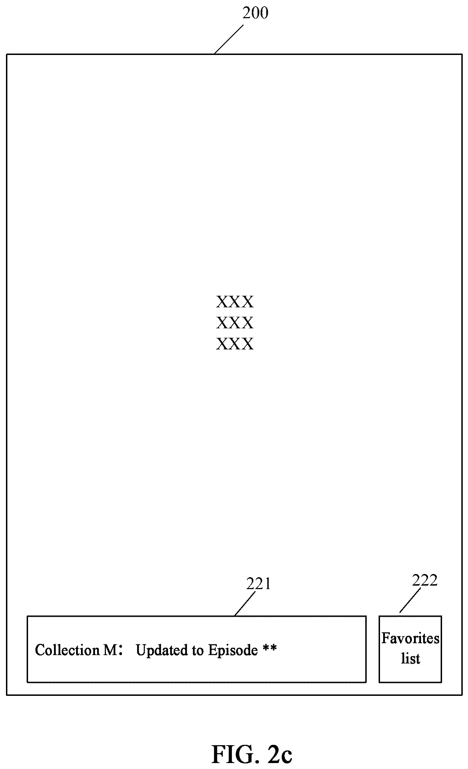

In an example, after the user triggers a close operation for the collection information of the three collections, as shown in FIG. 2c, the first multimedia content in Collection M may be played in full screen on the playing page 200. As shown in FIG. 2c, the bottom of the playing page may include both the episode selection control 221 corresponding to Collection M and a second control 222 for triggering displaying of a favorited collection list. In FIG. 2c, the second control 222 is presented as a copy "Favorites list". In another example, after the user triggers an operation for the "Favorites list", the client displays the favorited collection list. After the favorited collection list is closed, a display style corresponding to the second control in the playing page is reflected as an icon corresponding to the favorites list.

The interaction operations triggered on the video playing page 200 can be found in the relevant description section in the previous text and will not be repeatedly described here.

It should be noted that FIG. 2a, FIG. 2b, and FIG. 2c are shown for ease of understanding the relevant content of this solution, and do not constitute a limitation on the embodiments of the present application.

### Exemplary device

Based on the method provided by the above embodiment, the embodiments of the present application further provide an apparatus. The apparatus will be introduced below in conjunction with the accompanying drawings.

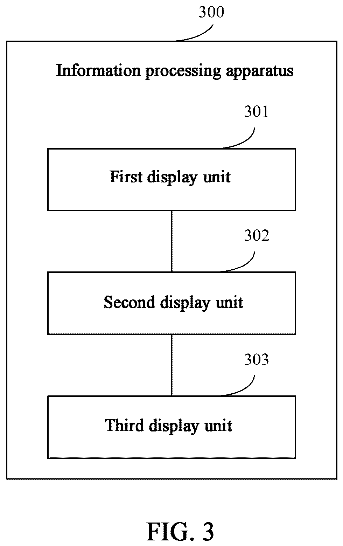

Referring to FIG. 3, it is a schematic structural diagram of an information processing apparatus provided by an embodiment of the present application. The apparatus 300 may specifically, for example, include: a first display unit 301, a second display unit 302, and a third display unit 303.

The first display unit 301 is configured to display a playing page for first multimedia content.

The second display unit 302 is configured to display prompt information on the playing page, wherein the first multimedia content belongs to a first multimedia content collection, and the prompt information is used for prompting that a favorited multimedia content collection has an update.

The third display unit 303 is configured to: in response to a triggering operation for the prompt information, display information of the favorited multimedia content collection having the update.

Optionally, the third display unit 303 is configured to:
display information respectively corresponding to each collection of at least one collection in a first area in the playing page, and play the first multimedia content in a second area on the playing page outside the first area, wherein the at least one collection is a part or all of the favorited multimedia content collection having the update.

Optionally, the third display unit 303 is configured to:
display a favorited collection list on the playing page, wherein the favorited collection list includes information respectively corresponding to each collection of at least one collection, and the at least one collection is a part or all of the favorited multimedia content collection having the update.

Optionally, the third display unit 303 is configured to:
display update information respectively corresponding to each collection of at least one collection, wherein the at least one collection is a part or all of the favorited multimedia content collection having the update.

Optionally, the third display unit 303 is configured to:
display the update information respectively corresponding to each collection according to an update order of the at least one collection.

Optionally, in response to the favorited multimedia content collection including the first multimedia content collection, update information of the first multimedia content collection is positioned at a first place of the update information respectively corresponding to each collection.

Optionally, the update information respectively corresponding to each collection of the at least one collection includes first update information of a first favorited collection; and the apparatus further includes:
a first switching unit, configured to: in response to a triggering operation for the first update information, switch the first multimedia content played on the playing page into multimedia content in the first favorited collection of the at least one collection.

Optionally, the apparatus further includes:
a second switching unit, configured to: in response to a preset sliding operation triggered in the second area on the playing page, switch the first multimedia content played on the playing page to multimedia content in a second favorited collection of the at least one collection.

Optionally,
in response to the at least one collection including the first multimedia content collection, the second favorited collection is a favorited multimedia content collection, which is displayed adjacent to the first multimedia content collection, of the at least one collection; or,
in response to the at least one collection not including the first multimedia content collection, the second favorited collection is a favorited multimedia content collection with latest update time of the at least one collection.

Optionally, an interaction identifier is further displayed in the first area; the interaction identifier is used for triggering displaying of a favorited collection list; and the apparatus further includes:
a fourth display unit, configured to: in response to a triggering operation for the interaction identifier, displaying the favorited collection list.

Optionally, the apparatus further includes:
an update unit, configured to: in response to that a quantity of pieces of updated multimedia content, which have been played, in the first favorited collection changes, update the first update information into second update information.

Optionally, switching the first multimedia content played on the playing page into the multimedia content in the first favorited collection of the at least one collection includes:
switching the first multimedia content played on the playing page into updated multimedia content in the first favorited collection or the second favorited collection; or,
switching the first multimedia content played on the playing page into a first piece of multimedia content in the first favorited collection or the second favorited collection; or,
switching the first multimedia content played on the playing page into unplayed multimedia content in the first favorited collection or the second favorited collection.

Optionally, the apparatus further includes:
a displaying canceling unit, configured to: in response to a close operation triggered in the playing page, cancel the displaying of the update information of each collection.

Optionally, the first display unit 301 is configured to:
display the first multimedia content on a first page; and
in response to a first operation for the first page, switch the first page to the playing page, and display the first multimedia content on the playing page.

The first page is used for displaying a first multimedia stream; the playing page is used for displaying a second multimedia stream; multimedia content in the second multimedia stream is multimedia content corresponding to a collection; and multimedia content in the first multimedia stream includes multimedia content corresponding to a collection and multimedia content corresponding to a non-collection.

The apparatus 300 is an apparatus corresponding to the method provided by the above method embodiment. Specific implementations of all the units of the apparatus 300 belong to the same concept of the above method embodiment. Therefore, the specific implementation of all the units of the apparatus 300 can be found in the description section of the above method embodiment, and will not be elaborated here.

The embodiments of the present application further provide a device. The device includes a processor and a memory.

The processor is configured to execute instructions stored in the memory to cause the device to perform the information processing method provided by any of the above method embodiments.

The embodiments of the present application provide a computer-readable storage medium, including instructions. The instructions instruct a device to perform the information processing method provided by any of the above method embodiments.

The embodiments of the present application provide a computer program product. The computer program product, when run on a computer, causes the computer to perform the information processing method provided by any of the above method embodiments.

Those skilled in the art will easily come up with other implementations of the present application after considering this specification and implementing the invention disclosed here. The present application aims to cover any variations, uses, or adaptive changes of the present application, and these variations, uses, or adaptive changes follow the general principles of the present application and include common knowledge or customary technical means in the technical field that are not disclosed herein. The specification and the embodiments are considered as merely exemplary, and the scope and spirit of the present application are pointed out in the following claims.

It should be understood that the present application is not limited to the precise structures that have been described above and shown in the drawings, and various modifications and changes can be made without departing from the scope of the present application. The scope of the present application is subject only to the appended claims.

The foregoing descriptions are merely preferred embodiments of the present application, but are not intended to limit present application. Any modification, equivalent replacement, or improvement made within the spirit and principle of present application shall fall within the protection scope of the present application.

## Claims

1. An information processing method, comprising:
displaying a playing page for first multimedia content, and displaying prompt information on the playing page, wherein the first multimedia content belongs to a first multimedia content collection, and the prompt information is used for prompting that a favorited multimedia content collection has an update; and
in response to a triggering operation for the prompt information, displaying information of the favorited multimedia content collection having the update.

2. The method according to claim 1, wherein displaying the information of the favorited multimedia content collection having the update comprises:
displaying information respectively corresponding to each collection of at least one collection in a first area in the playing page, and playing the first multimedia content in a second area on the playing page outside the first area, wherein the at least one collection is a part or all of the favorited multimedia content collection having the update.

3. The method according to claim 1, wherein displaying the information of the favorited multimedia content collection having the update comprises:
displaying a favorited collection list on the playing page, wherein the favorited collection list comprises information respectively corresponding to each collection of at least one collection, and the at least one collection is a part or all of the favorited multimedia content collection having the update.

4. The method according to claim 1, wherein displaying the information of the favorited multimedia content collection having the update comprises:
displaying update information respectively corresponding to each collection of at least one collection, wherein the at least one collection is a part or all of the favorited multimedia content collection having the update.

5. The method according to claim 4, wherein displaying the update information respectively corresponding to each collection of the at least one collection comprises:
displaying the update information respectively corresponding to each collection according to an update order of the at least one collection.

6. The method according to claim 4, wherein in response to the favorited multimedia content collection comprising the first multimedia content collection, update information of the first multimedia content collection is positioned at a first place of the update information respectively corresponding to each collection.

7. The method according to claim 4, wherein the update information respectively corresponding to each collection of the at least one collection comprises first update information of a first favorited collection; and the method further comprises:
in response to a triggering operation for the first update information, switching the first multimedia content played on the playing page into multimedia content in the first favorited collection of the at least one collection.

8. The method according to claim 2, further comprising:
in response to a preset sliding operation triggered in the second area on the playing page, switching the first multimedia content played on the playing page to multimedia content in a second favorited collection of the at least one collection.

9. The method according to claim 8, wherein
in response to the at least one collection comprising the first multimedia content collection, the second favorited collection is a favorited multimedia content collection, which is displayed adjacent to the first multimedia content collection, of the at least one collection; or,
in response to the at least one collection not comprising the first multimedia content collection, the second favorited collection is a favorited multimedia content collection with latest update time of the at least one collection.

10. The method according to claim 2, wherein an interaction identifier is further displayed in the first area; the interaction identifier is used for triggering displaying of a favorited collection list; and the method further comprises: in response to a triggering operation for the interaction identifier, displaying the favorited collection list.

11. The method according to claim 7, further comprising:
in response to that a quantity of pieces of updated multimedia content, which have been played, in the first favorited collection changes, updating the first update information into second update information.

12. The method according to claim 7 or 8, wherein switching the first multimedia content played on the playing page into the multimedia content in the first favorited collection of the at least one collection comprises:
switching the first multimedia content played on the playing page into updated multimedia content in the first favorited collection or the second favorited collection; or,
switching the first multimedia content played on the playing page into a first piece of multimedia content in the first favorited collection or the second favorited collection; or,
switching the first multimedia content played on the playing page into unplayed multimedia content in the first favorited collection or the second favorited collection.

13. The method according to claim 4, further comprising:
in response to a close operation triggered in the playing page, canceling the displaying of the update information of each collection.

14. The method according to claim 1, wherein displaying the playing page for the first multimedia content comprises:
displaying the first multimedia content on a first page; and
in response to a first operation for the first page, switching the first page to the playing page, and displaying the first multimedia content on the playing page;
wherein the first page is used for displaying a first multimedia stream; the playing page is used for displaying a second multimedia stream; multimedia content in the second multimedia stream is multimedia content corresponding to a collection; and multimedia content in the first multimedia stream comprises multimedia content corresponding to a collection and multimedia content corresponding to a non-collection.

15. An information processing apparatus, comprising:
a first display unit, configured to display a playing page for first multimedia content;
a second display unit, configured to display prompt information on the playing page, wherein the first multimedia content belongs to a first multimedia content collection, and the prompt information is used for prompting that a favorited multimedia content collection has an update; and
a third display unit, configured to: in response to a triggering operation for the prompt information, display information of the favorited multimedia content collection having the update.

16. A device, comprising a processor and a memory,
wherein the processor is configured to execute instructions stored in the memory to cause the device to perform the method according to any one of claims 1 to 14.

17. A computer-readable storage medium, comprising instructions, wherein the instructions instruct a device to perform the method according to any one of claims 1 to 14.
